# EUROPEAN PATENT APPLICATION

(11) **EP 4 641 917 A1**
(43) Date of publication of application: **29.10.2025**
(21) Application number: 24172107.5
(22) Date of filing: 24.04.2024
(51) Int. Cl.: H02P 21/22

(54) **IMPROVED ELECTRIC CURRENT RANGE FOR ELECTRIC MACHINES**

(71) Applicant: VOLVO TRUCK CORPORATION, 405 08 Göteborg (SE)
(72) Inventor: GILLSTRÖM, Andreas, 421 34 VÄSTRA FRÖLUNDA (SE)
(74) Representative: Kransell & Wennborg KB

(57) **Abstract**

A computer system (100) for controlling an operation of a 3-phase electric machine (102) comprising one electric current sensor (104a-c) for each phase (106a-c) for measuring the respective electric current, the computer system comprising processing circuitry (110) configured to: a) determine the one phase with the highest electric current (202a-c) among the three phases, b) measure the two of the phase electric currents with the lowest magnitudes, c) calculating the highest phase electric current based on the measured two electric currents, and

d) control the operation of the electric machine based on the measured two lowest electric currents and the calculated highest electric current.

## Description

### TECHNICAL FIELD

The disclosure relates generally to electric machine control. In particular aspects, the disclosure relates to improved electric current range for electric machines. The disclosure can be applied to heavy-duty vehicles, such as trucks, buses, and construction equipment, among other vehicle types such as cars. The disclosure can be applied to marine applications, industrial applications, stationary applications, and passenger vehicles. Although the disclosure may be described with respect to a particular vehicle, the disclosure is not restricted to any particular vehicle.

### BACKGROUND

For 3-phase electric machines and generators the electric current sensor range is often selected to be able to measure the maximum expected amplitude of the phase currents during normal operation. Generally, a higher range decreases the accuracy at the lower range, and for this reason the range is often kept as low as possible. However, this means that the electric current sensors are typically the limiting factor of the maximum output current. Even if the inverter itself could output more current it is not possible as the current sensors would be saturated.

### SUMMARY

According to a first aspect of the disclosure, there is provided a computer system for controlling an operation of a 3-phase electric machine comprising one electric current sensor for each phase for measuring the respective electric current, the computer system comprising processing circuitry configured to: a) determine the one phase with the highest electric current among the three phases, b) measure the two of the phase electric currents with the lowest magnitudes, c) calculate the highest phase electric current based on the measured two electric currents, and d) control the operation of the electric machine based on the measured two lowest electric currents and the calculated highest electric current.

The first aspect of the disclosure may seek to reduce the impact of the electric current sensor range on the magnitude of the phase currents. A technical benefit may include that higher phase currents are available than what the electric current sensor may allow.

Optionally in some examples, including in at least one preferred example, to determine the one phase with the highest electric current may include to determine the one phase which electric current sensor is at or near saturation. A technical benefit may include that a simple yet reliable way of identifying the highest current phase is provided.

In one example, determine the one phase with the highest electric current may include to determine the one phase which electric current sensor is saturated.

Optionally in some examples, including in at least one preferred example, wherein the steps a)-d) may be continuously performed by the processing circuitry as long as at least one electric current sensor is saturated. In other words, the steps a)-d) may be performed only while one of the electric current sensors is saturated. A technical benefit may include that the method is only used when it is needed, in other situations, the electric current sensors are used for determining all phase currents.

Optionally in some examples, including in at least one preferred example, the processing circuitry may be further configured to: calculate the highest electric current by assuming that the sum of the two lowest measured electric currents and the highest electric current is zero. A technical benefit may include that this provides a simple and reliable way of calculating the unknown highest electric current.

Optionally in some examples, including in at least one preferred example, the processing circuitry may be further configured to: control the operation of the electric machine by pulse width modulation control based on the measured and calculated phase electric currents. In other words, the electric machine may be operated using the measured and calculated electric currents thereby allowing for higher electric current operation than the electric current sensors allow.

Optionally in some examples, including in at least one preferred example, the processing circuitry may be further configured to disable a Kirchhoff current sum to zero check. The disabling may be performed only when one of the phase currents required to be calculated, for example due to that one of the sensors has saturated. The Kirchhoff current check is used for validating that the measured electric currents are reasonable so that electrical faults or sensor failure can be detected. This check is not available when not all electrical currents are measured using the sensors, thereby reducing the workload on processing circuitry. The Kirchhoff current check assumes that the sum of the currents is zero to check that the currents are reasonable and that no faults are present.

Optionally in some examples, including in at least one preferred example, the processing circuitry may be further configured to compare the calculated electric current with a measured electric current on the same phase, if a large difference between the calculated electric current and the measured electric current is detected, a fault may be concluded. The difference between current is at the time instance where the sensor goes from being saturated to not saturated. If there is a jump or step between the calculated current and the measured current, it may indicate a fault.

Optionally in some examples, including in at least one preferred example, the processing circuitry may be further configured to utilize the measured rotor angle of the electric machine and the estimated electric current angle of each phase to determine the one phase with the highest expected electric current among the three phases at next current sampling. That is, as an alternative to measure the phase currents and detect a saturated sensor, the rotor angle and the estimated current angle may be evaluated to determine the expected highest current, or the expected two lowest currents.

Optionally in some examples, including in at least one preferred example, the selection of the two lowest magnitude phase currents and the calculation of the highest phase current may be dynamically adjusted based on the operational state of the electric machine. That is, which electric current that is calculated is varied depending on which electric current is highest at the present time.

Optionally in some examples, including in at least one preferred example, the electric machine may be an electric motor or generator of an electrified vehicle.

Optionally in some examples, including in at least one preferred example, the processing circuitry may be further configured to subsequent to determining the one phase with the highest phase electric current, disable diagnostic testing of the electric current sensor that is associated with the phase of the highest electric current.

There is further provided a vehicle comprising the computer system of any of the examples.

According to a second aspect of the disclosure, there is provided a computer-implemented method for controlling an operation of a 3-phase electric machine comprising one electric current sensor for each phase for measuring the respective electric current, the method comprising: a) determining, by processing circuitry of a computer system, the one phase with the highest electric current among the three phases, b) determining, by the processing circuitry, measurements of the two of the phase electric currents with the lowest magnitudes, c) calculating, by the processing circuitry, the highest phase electric current based on the measured two electric currents, and d) controlling, by the processing circuitry, the operation of the electric machine based on the measured two lowest electric currents and the calculated highest electric current.

The second aspect of the disclosure may seek to reduce the impact of the electric current sensor range on the magnitude of the phase currents. A technical benefit may include that higher phase currents are available than what the electric current sensor may allow.

Optionally in some examples, including in at least one preferred example, determining the one phase with the highest electric current may include determining the one phase which electric current sensor is at or near saturation. A technical benefit may include that a simple yet reliable way of identifying the highest current phase is provided.

Optionally in some examples, including in at least one preferred example, wherein the steps a)-d) may be continuously performed by the processing circuitry when at least one electric current sensor is saturated. In other words, the steps a)-d) may be performed only while one of the electric current sensors is saturated. A technical benefit may include that the method is only used when it is needed, in other situations, the electric current sensors are used for determining all phase currents.

Optionally in some examples, including in at least one preferred example, the method may comprise calculating, by the processing circuitry, the highest electric current by assuming that the sum of the two lowest measured electric currents and the third electric current is zero. A technical benefit may include that this provides a simple and reliable way of calculating the unknown highest electric current.

Optionally in some examples, including in at least one preferred example, the method may comprise controlling, by the processing circuitry, the operation of the electric machine by pulse width modulation control based on the measured and calculated phase electric currents. Thus, the electric machine may be operated using the measured and calculated electric currents thereby allowing for higher electric current operation than the electric current sensors allow.

Optionally in some examples, including in at least one preferred example, the method may comprise disabling, by the processing circuitry, a Kirchhoff current check. This check is not needed when not all electrical currents are measured using the sensors, thereby reducing the workload on processing circuitry.

Optionally in some examples, including in at least one preferred example, the method may comprise utilizing, by the processing circuitry, measured rotor angles of the electric machine to determine the one phase with the highest electric current among the three phases. That is, as an alternative to measure the phase currents and detect a saturated sensor, the rotor angles may be evaluated to determine the expected highest current, or the expected two lowest currents. It may be possible to determine if the rotor angle exceeds a threshold, if so, steps a)-d) are continuously repeated, if the angle is below the threshold, the method is interrupted.

Optionally in some examples, including in at least one preferred example, the selection of the two lowest magnitude phase currents and the calculation of the highest phase current may be dynamically adjusted based on the operational state of the electric machine. That is, which electric current that is calculated is varied depending on which electric current is highest at the present time.

There is further provided a computer program product comprising program code for performing, when executed by the processing circuitry, the method of any of the examples.

There is further provided a non-transitory computer-readable storage medium comprising instructions, which when executed by the processing circuitry, cause the processing circuitry to perform the method of any of the examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system configured to control an operation of a 3-phase electric machine according to an example.
**FIG. 2** is a graph of the electrical currents 202a-c over time for each of the three phases 106a-c.
**FIG. 3** is a flow chart of an exemplary method for controlling an operation of a 3-phase electric machine according to an example.
**FIG. 4** is another view of **FIG. 1**, according to an example.
**FIG. 5** is a flow chart of an exemplary method for controlling an operation of a 3-phase electric machine according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Electric current sensors for the phases of a three-phase electric machine or generator are subject to saturation at high currents. This may limit the maximum output current of an inverter of the electric machine or generator. The herein disclosed examples provide for higher output currents than what would be allowed based on the capability of the electric current sensors. Especially, the herein disclosed examples include to calculate the highest electric current instead of measuring the highest current using the sensor of that phase.

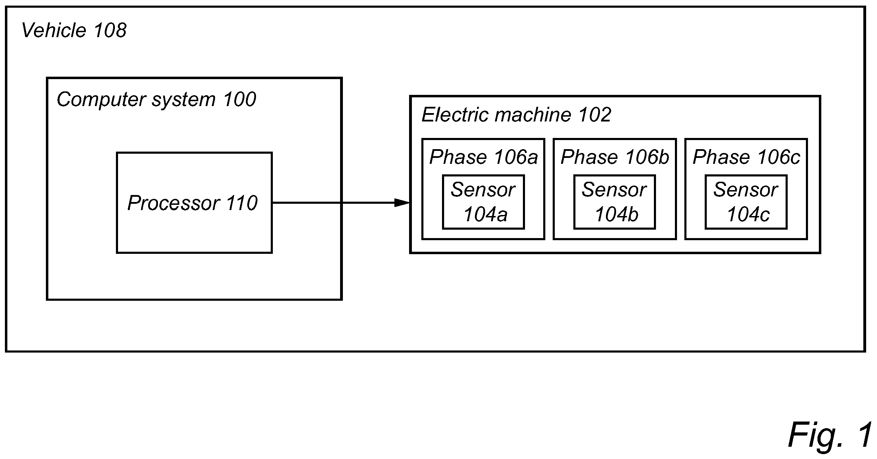

**FIG. 1** is an exemplary system diagram of a computer system 100 according to an example. The computer system 100 is configured to control an operation of a 3-phase electric machine 102 comprising one electric current sensor 104a,b,c for each phase 106a,b,c for measuring the respective electric current.

The 3-phase electric machine 102 may be an electric generator or an electric motor, for example of a vehicle 108. Generally, a 3-phase electric machine 102 operates by utilizing three alternating electric currents to generate a rotating magnetic field. These alternating electrical currents are herein referred to as simply electrical currents, or alternatively electrical phase currents, or phase currents. Coils of a stator are energized from the three-phase power source. A rotor, including magnets, rotates as a result of being exposed to the rotating magnetic field. The rotor is connected to the motor or generator shaft that rotates to produce the mechanical energy output of the motor or generator. 3-phase electric machines *per se* are considered known to the skilled person.

The computer system comprises processing circuitry 110 configured to determine the one phase with the highest electric current among the three phases. This may be preceded by where the processing circuitry 102 determines that one of the sensors 104a-c is at or near saturation, i.e., is receiving or is almost receiving a higher current than it can detect, thereby saturating the analog to digital converter, ADC, of the sensor.

To determine the one phase with the highest electric current may be performed in more than one way. In one example, the processing circuitry 110 detects which of the sensors 104a-c that is saturated. This sensor is then assumed to belong to the phase with the presently highest electrical current.

In another example, the processing circuitry 110 is further configured to utilize a measured rotor angle of the electric machine 102 and the estimated electric current angle of each phase to determine the one phase with the highest expected electric current among the three phases at next current sampling. The processing circuitry 110 may have stored data that associates rotor angle and current angle with assumed electric current. In this way, the processing circuitry 110 may compare the present rotor angle and current angle to the data to determine which electric current among the phases 106a-c that is the highest among the phases 106a-c.

Once the highest current phase is identified, the processing circuitry 110 measure the two of the phase electric currents with the lowest magnitudes. The processing circuitry 110 measures the electric currents using the two sensors of the sensors 104a-c that are associated with the lowest currents phases, or the phases which sensors have not saturated.

The processing circuitry 110 calculates the highest phase electric current based on the measured two electric currents. For example, if the phase 106a turns out to be the phase with the highest current, for example by detecting that the sensor 104a has saturated, the current of that phase 106a is calculated based on the electric currents measured by the sensors 106b and 106c measuring the two lowest currents. For example, the highest electric current may be calculated by assuming that the sum of the two lowest measured electric currents and the highest electric current is zero. This assessment is based on the Kirchhoff's current law.

A common way to detect faults in 3-phase electric machines is to perform Kirchhoff current check which involves checking that the sum of the currents of the three phases is zero. If the sum of the currents of the three phases is not zero, a fault may be suspected, and a signal thereof may be transmitted to user interfaces or control systems of the vehicle 108. Example faults include isolation faults and faults in the electric current sensor or its measuring circuit, faults in analog to digital converts of the electric current sensors, etc.

With the herein described method, the processing circuitry may disable a Kirchhoff current check when one of the phase currents is calculated. Since one of the currents is calculated, the Kirchhoff current check is no longer accurate.

The processing circuitry 110 is configured to control the operation of the electric machine 102 based on the measured two lowest electric currents and the calculated highest electric current. Control of the operation of the electric machine 102 may be by pulse width modulation control based on the measured and calculated phase electric currents.

The above-described methodology is performed while the electric machine 102 is operative. That is, as the phase currents vary, the phase 106a-c with the highest electric current will also change. Therefore, the selection of the two lowest magnitude phase currents and the calculation of the highest phase current are dynamically adjusted based on the operational state of the electric machine.

Furthermore, the above method may be triggered by detecting that one of the sensors 104a-c is at or near saturation. As long as one sensor 104a-c is saturated the method is continuously performed and is terminated when all sensors are again in range.

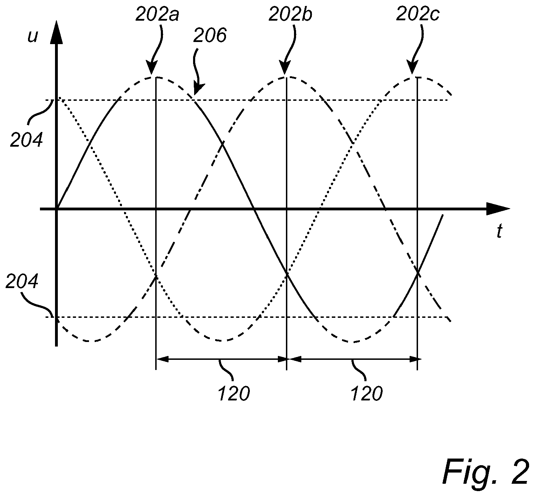

**FIG. 2** is a graph of the electrical currents 202a-c over time for each of the three phases 106a-c. The phase currents 202a-c are phase shifted 120 degrees apart, that is the phase between phase current 202a and 202b is 120 degrees and the phase between phase current 202b and 202c is 120 degrees. The graph also shows the threshold 204 for sensor 104a-c saturation. Thus, at electric current magnitudes larger than the threshold 204, the corresponding sensor is saturated, indicated by dashed lines for the respective phase current 202a-c. During the time slots when the sensor 104a of the first phase 106a measuring the first phase current 202a is saturated, the other two phase currents 202b-c are measured by their respective sensors 104b-c while the first phase current 202a is calculated based on the other two lower phase currents 202b-c. During the time slots when the sensor 104b of the second phase 106b measuring the second phase current 202b is saturated, the other two phase currents 202a,c are measured by their respective sensors 104a,c while the second phase current 202b is calculated based on the other two lower phase currents 202a,c. During the time slots when the sensor 104c of the third phase 106c measuring the third phase current 202c is saturated, the other two phase currents 202a-b are measured by their respective sensors 104a-b while the third phase current 202c is calculated based on the other two lower phase currents 202a-b. The selection of the two lowest magnitude phase currents and the calculation of the highest phase current are dynamically adjusted based on the operational state of the electric machine.

Furthermore, in the transition between a phase current being measured and being calculated, for example the transition 206 indicate for the first phase current 202a, there should be a smooth transition without a jump or step. In case of a step at the transition, a fault in the electric machine, or faults in the electric currents and associated measuring circuits may be suspected. Therefore, the processing circuitry 110 may determine a difference between the calculate electric current and the measure electric current at the transition 206, and if the difference is equal to or exceeds a predetermined threshold, provide a message that a fault is present in the electric machine 102.

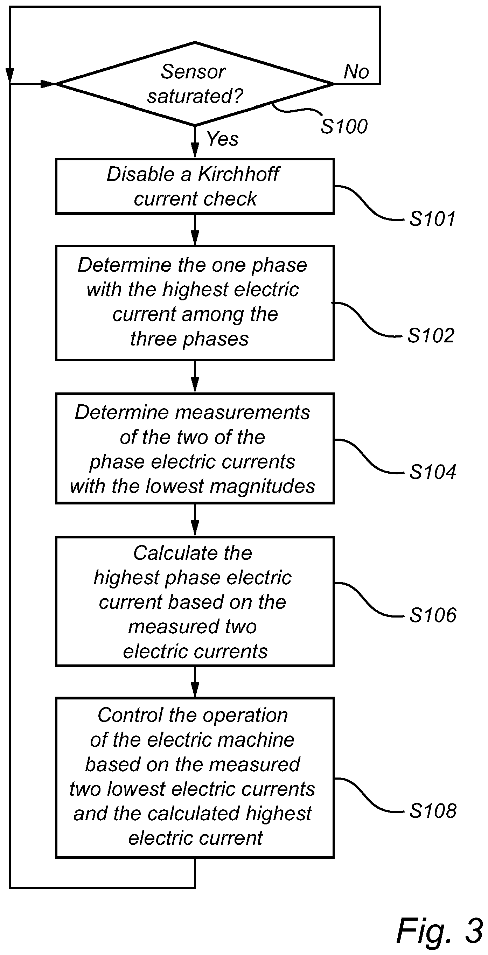

**FIG. 3** is a flowchart of a method for controlling an operation of a 3-phase electric machine 102 comprising one electric current sensor 104a-c for each phase 106a-c for measuring the respective electric current.

The method comprises a) determining in step S 102, by processing circuitry 110 of a computer system 100, the one phase with the highest electric current among the three phases 104a-c. Determining the one phase 106a-c with the highest electric current may include determining the one phase which electric current sensor is at or near saturation. Thus, it is assumed that the phase that belongs to the saturated sensor is the phase with the highest current. The processing circuitry 110 may be configured to disable diagnosis for out of range for the saturated electric current sensor. More specifically, the processing circuitry 110 may be further configured to, subsequent to determining the one phase with the highest phase electric current, disable diagnostic testing of the electric current sensor that is associated with the phase of the highest electric current. Once another electric current sensor is saturated, the diagnostic testing of the first electric current sensor is again enabled. That is, the diagnostic testing is disabled for the one electric current sensor that is presently saturated.

As a prior step S 100, it may be determined that one of the sensors S104a-c is saturated, whereby the method proceeds only when one of the sensors S 104a-c is saturated. In this case, optionally disabling, in step S101, by the processing circuitry, a Kirchhoff current check when one of the sensors 104a-c is saturated and one of the currents is to be calculated instead of measured. If the Kirchhoff current check is already disabled optional step S 100 may be omitted.

Another way to determine which phase is the highest current phase is to utilize, by the processing circuitry, measured rotor angles of the electric machine 102 to determine the one phase 106a-c with the highest electric current among the three phases 106a-c.

In step S104, b) determining, by the processing circuitry 110, measurements of the two of the phase electric currents with the lowest magnitudes. The measurements are made by the sensors 104a-c of the two lowest current phases.

In step S 106, c) calculating, by the processing circuitry 110, the highest phase electric current based on the measured two electric currents. The highest electric current can be calculated by assuming that the sum of the two lowest measured electric currents and the third electric current is zero.

In step S 108, d) controlling, by the processing circuitry 110, the operation of the electric machine based on the measured two lowest electric currents and the calculated highest electric current. The operation of the electric machine 102 may be controlled by pulse width modulation control based on the measured phase electric currents and calculated phase electric currents.

Preferably, the steps S 102-S 108 are continuously performed by the processing circuitry as long as at least one electric current sensor is saturated. In other words, the method is looped until no sensor is saturated, and the loop begins again.

As the phase currents change so does which sensor is presently saturated. This means that the selection of the two lowest magnitude phase currents and the calculation of the highest phase current are dynamically adjusted based on the operational state of the electric machine.

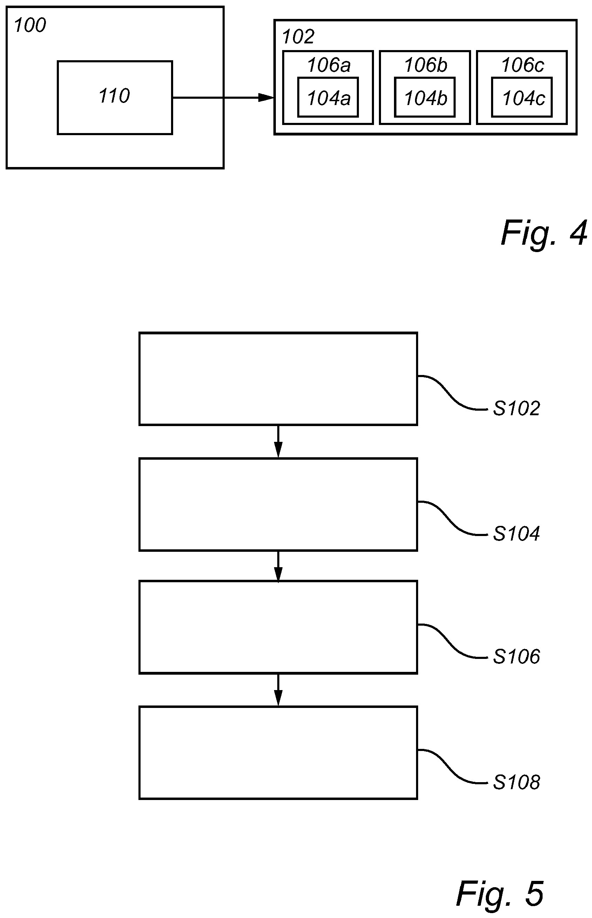

**FIG. 4** is another view of **FIG. 1**, according to an example. There is shown a computer system 100 for controlling an operation of a 3-phase electric machine 102 comprising one electric current sensor 104a-c for each phase 106a-c for measuring the respective electric current. The computer system comprising processing circuitry 110 configured to: a) determine the one phase with the highest electric current among the three phases, b) measure the two of the phase electric currents with the lowest magnitudes, c) calculate the highest phase electric current based on the measured two electric currents, and d) control the operation of the electric machine based on the measured two lowest electric currents and the calculated highest electric current.

**FIG. 5** is a flow chart of a method to according to an example. The computer-implemented method is for controlling an operation of a 3-phase electric machine 102 comprising one electric current sensor 104a-c for each phase 106a-c for measuring the respective electric current, the method comprising: a) determining, in step S102, by processing circuitry 110 of a computer system 100, the one phase with the highest electric current among the three phases, b) determining, in step S104, by the processing circuitry, measurements of the two of the phase electric currents with the lowest magnitudes, c) calculating, in step S106, by the processing circuitry, the highest phase electric current based on the measured two electric currents, and d) controlling, in step S108, by the processing circuitry, the operation of the electric machine based on the measured two lowest electric currents and the calculated highest electric current.

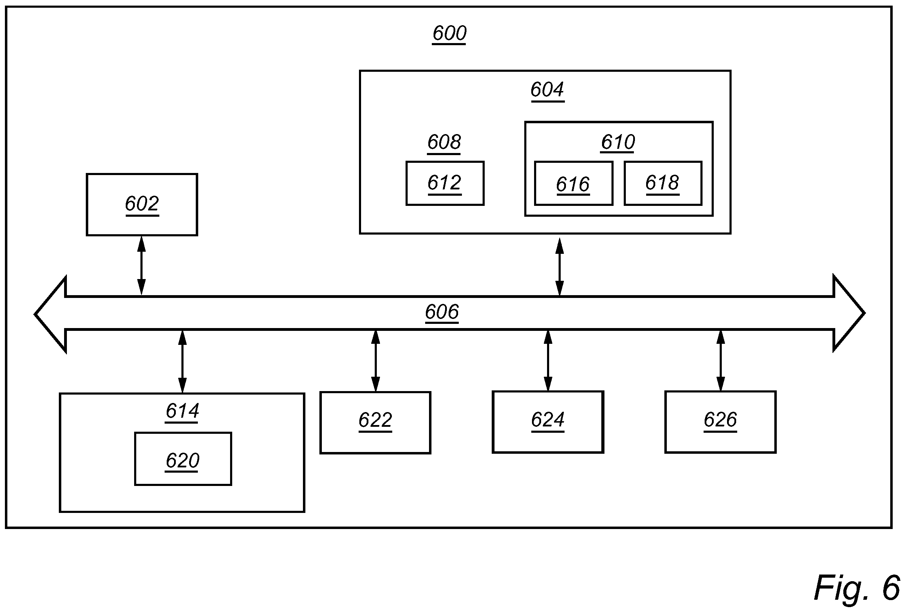

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for controlling an operation of a 3-phase electric machine comprising one electric current sensor for each phase for measuring the respective electric current, the computer system comprising processing circuitry configured to: a) determine the one phase with the highest electric current among the three phases, b) measure the two of the phase electric currents with the lowest magnitudes, c) calculating the highest phase electric current based on the measured two electric currents, and d) control the operation of the electric machine based on the measured two lowest electric currents and the calculated highest electric current.

Example 2: The computer system of claim 1, wherein, determine the one phase with the highest electric current includes to determine the one phase which electric current sensor is at or near saturation.

Example 3: The computer system of claim 2, wherein the steps a)-d) are continuously performed by the processing circuitry as long as, or when, at least one electric current sensor is saturated.

Example 4: The computer system of any of claims 1-3, wherein the processing circuitry is further configured to: calculate the highest electric current by assuming that the sum of the two lowest measured electric currents and the highest electric current is zero.

Example 5: The computer system of any of claims 1-4, wherein the processing circuitry is further configured to: control the operation of the electric machine by pulse width modulation control based on the measured and calculated phase electric currents.

Example 6: The computer system of any of claims 1-5, wherein the processing circuitry is further configured to disable a Kirchhoff current check when one of the phase currents is calculated.

Example 7: The computer system of any of claims 1-6, wherein the processing circuitry is further configured to: utilize measured rotor angles of the electric machine to determine the one phase with the highest electric current among the three phases.

Example 8: The computer system of any of claims 1-7, wherein the selection of the two lowest magnitude phase currents and the calculation of the highest phase current are dynamically adjusted based on the operational state of the electric machine.

Example 9: The computer system of any of claims 1-8, wherein the electric machine is an electric motor or generator of an electrified vehicle.

Example 10: A vehicle comprising the computer system of any of claims 1-9.

Example 11: A computer-implemented method for controlling an operation of a 3-phase electric machine comprising one electric current sensor for each phase for measuring the respective electric current, the method comprising: a) determining, by processing circuitry of a computer system, the one phase with the highest electric current among the three phases, b) determining, by the processing circuitry, measurements of the two of the phase electric currents with the lowest magnitudes, c) calculating, by the processing circuitry, the highest phase electric current based on the measured two electric currents, and d) controlling, by the processing circuitry, the operation of the electric machine based on the measured two lowest electric currents and the calculated highest electric current.

Example 12: The method of claim 11, wherein, determining the one phase with the highest electric current includes determining the one phase which electric current sensor is at or near saturation.

Example 13: The method of claim 12, wherein the steps a)-d) are continuously performed by the processing circuitry when at least one electric current sensor is saturated.

Example 14: The method of any of claims 11-13, further comprising: calculating, by the processing circuitry, the highest electric current by assuming that the sum of the two lowest measured electric currents and the third electric current is zero.

Example 15: The method of any of claims 11-14, further comprising: controlling, by the processing circuitry, the operation of the electric machine by pulse width modulation control based on the measured and calculated phase electric currents.

Example 16: The method of any of claims 11-15, comprising, disabling, by the processing circuitry, a Kirchhoff current check when one of the phase currents is calculated.

Example 17: The method of any of claims 11-16, further comprising: utilizing, by the processing circuitry, measured rotor angles of the electric machine to determine the one phase with the highest electric current among the three phases.

Example 18: The method of any of claims 11-17, wherein the selection of the two lowest magnitude phase currents and the calculation of the highest phase current are dynamically adjusted based on the operational state of the electric machine.

Example 19: A computer program product comprising program code for performing, when executed by the processing circuitry, the method of any of claims 11-17.

Example 20: A non-transitory computer-readable storage medium comprising instructions, which when executed by the processing circuitry, cause the processing circuitry to perform the method of any of claims 11-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for controlling an operation of a 3-phase electric machine (102) comprising one electric current sensor (104a-c) for each phase (106a-c) for measuring the respective electric current, the computer system comprising processing circuitry (110) configured to:
a) determine the one phase with the highest electric current (202a-c) among the three phases,
b) measure the two of the phase electric currents with the lowest magnitudes,
c) calculate the highest phase electric current based on the measured two electric currents, and
d) control the operation of the electric machine based on the measured two lowest electric currents and the calculated highest electric current.

2. The computer system of claim 1, wherein, determine the one phase with the highest electric current includes to determine the one phase which electric current sensor is at or near saturation.

3. The computer system of claim 2, wherein the steps a)-d) are continuously performed by the processing circuitry as long as at least one electric current sensor is saturated.

4. The computer system of any of claims 1-3, wherein the processing circuitry is further configured to:
calculate the highest electric current by assuming that the sum of the two lowest measured electric currents and the highest electric current is zero.

5. The computer system of any of claims 1-4, wherein the processing circuitry is further configured to:
control the operation of the electric machine by pulse width modulation control based on the measured and calculated phase electric currents.

6. The computer system of any of claims 1-5, wherein the processing circuitry is further configured to disable a Kirchhoff current check.

7. The computer system of any of claims 1-6, wherein the processing circuitry is further configured to:
utilize measured rotor angles of the electric machine to determine the one phase with the highest electric current among the three phases.

8. The computer system of any of claims 1-7, wherein the selection of the two lowest magnitude phase currents and the calculation of the highest phase current are dynamically adjusted based on the operational state of the electric machine.

9. The computer system of any of claims 1-8, wherein the electric machine is an electric motor or generator of an electrified vehicle.

10. A vehicle comprising the computer system of any of claims 1-9.

11. A computer-implemented method for controlling an operation of a 3-phase electric machine (102) comprising one electric current sensor (104a-c) for each phase (106a-c) for measuring the respective electric current, the method comprising:
a) determining (S102), by processing circuitry (110) of a computer system (100), the one phase with the highest electric current among the three phases,
b) determining (S104), by the processing circuitry, measurements of the two of the phase electric currents with the lowest magnitudes,
c) calculating (S106), by the processing circuitry, the highest phase electric current based on the measured two electric currents, and
d) controlling (S108), by the processing circuitry, the operation of the electric machine based on the measured two lowest electric currents and the calculated highest electric current.

12. The method of claim 11, wherein, determining the one phase with the highest electric current includes determining the one phase which electric current sensor is at or near saturation.

13. The method of claim 12, wherein the steps a)-d) are continuously performed by the processing circuitry when at least one electric current sensor is saturated.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
